# EUROPÄISCHE PATENTSCHRIFT

(11) **EP 3 292 177 B1**
(45) Veröffentlichungstag und Bekanntmachung des Hinweises auf die Patenterteilung: **23.06.2021**
(21) Anmeldenummer: 16724309.6
(22) Anmeldetag: 03.05.2016
(51) Int. Cl.: C09J 7/10, B29C 70/54, C08L 9/02, C08L 75/04, C09J 163/00

(54) **VERFAHREN ZUR HERSTELLUNG EINES KOMPOSITS AUS FASERGEBILDEN UND EINEM KLEBEBAND MIT TEMPORÄR-FIXIER-KLEBSTOFF**
METHOD FOR MANUFACTURING OF A COMPOSITE MADE FROM A FIBROUS MATERIAL AND AN ADHESIVE STRIP HAVING A TEMPORARY FIXING ADHESIVE
PROCÉDÉ DE FABRICATION D'UN COMPOSITE SUR LA BASE DES PRODUITS FIBREUX ET D'UN RUBAN D' ADHÉSIF DE FIXATION TEMPORAIRE

(30) Priorität: 05.05.2015 DE 102015208320
(43) Veröffentlichungstag der Anmeldung: 14.03.2018
(73) Patentinhaber: tesa SE, 22848 Norderstedt (DE)
(72) Erfinder: JAKOBEIT, Oliver, 22119 Hamburg (DE); KEREP, Patrick, 22767 Hamburg (DE); SCHUH, Christian, 22767 Hamburg (DE)
(74) Vertreter: tesa SE
(86) Internationale Anmeldenummer: PCT/EP2016/059807
(87) Internationale Veröffentlichungsnummer: WO 2016/177685

(56) Entgegenhaltungen:
- WO-A1-02/068555
- WO-A1-2007/093318
- WO-A1-2009/087192

## Beschreibung

Die vorliegende Erfindung betrifft ein Verfahren zum Herstellen eines Komposits aus Fasergebilden und einem Klebeband, gemäß Anspruch 1, enthaltend einen Temporär-Fixier-Klebstoff für eine erste temporäre Fixierung zweier Substrate aneinander als Vorstufe einer zweiten finalen Fixierung der beiden Substrate, wobei die zweite finale Fixierung mittels eines Final-Fixier-Klebstoffes, enthaltend ein Epoxidharz erfolgt und dieser Final-Fixier-Klebstoff den Temporär-Fixier-Klebstoff im Zuge der zweiten finalen Fixierung aufnimmt.,.

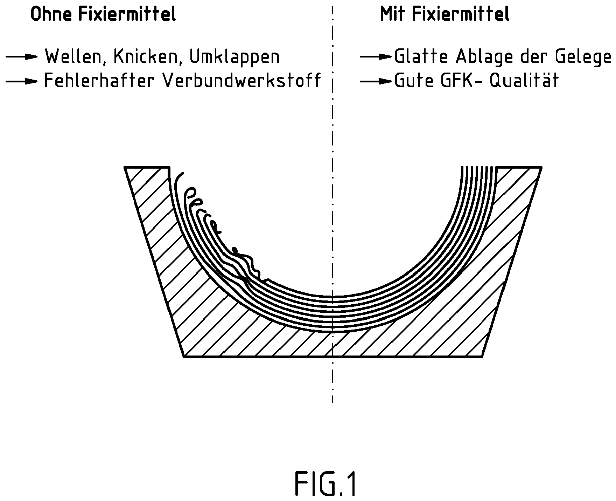

Faserverstärkte Epoxidharze haben zahlreiche Anwendungsgebietet. So kommen sie in der Automobilindustrie, beim Bootsbau, beim Flugzeugbau oder bei der Herstellung von Rotorblättern für Windräder zum Einsatz. Bei der Herstellung von Rotorblättern für Windräder werden viele Lagen Glasfasermatten großflächig in der gewünschten Form ausgelegt. In einem sog. Vakuum-Infusionsprozess werden dann Epoxidharze eingesaugt *(Prozessnamen: vacuum-assisted resin transfer molding (VARTM), vacuum infusion).* Dies ist in der Abb. 1 gezeigt. Um zu verhindern, dass sich die Glasfasermatten in diesem Prozess verschieben oder Falten werfen, was ein umso größeres Problem darstellt, je größer die Glasfasermatten sind, ist es gewünscht, die Glasfasermatten temporär an der gewünschten Position zu halten. Dazu werden sie entweder an den Rändern verklebt oder Sprühklebstoffe verwendet. Die Randverklebung ist aufwendig und fehleranfällig beim Fixieren der Matten. Da die Matten nur an ihren Rändern fixiert sind, kann es zu Verwerfungen der Matten in weiter innenliegenden Bereichen der Form kommen, die negativen Einfluss auf das Produkt haben. Das Aufbringen von Sprühklebstoffen ist ebenfalls zeitaufwendig und fehleranfällig, da die Dosierung des Klebstoffs dem Aufbringer obliegt. Eine gleichmäßige Schichtdicke der Klebeschicht kann somit nicht gewährleistet werden. Außerdem enthalten Sprühklebstoffe große Mengen an z.T. gesundheitsschädlichen bzw. reizenden Lösungsmitteln wie beispielsweise Styrol oder Butanon, die vor der Verklebung abdampfen müssen. Da über den Sprühklebstoff ein Fremdmaterial in das Komposit miteingebracht wird, ist die Performance des ausgehärteten Glasfaser-Epoxid-Komposits außerdem etwas schlechter als die des reinen Epoxid-Komposits ohne den Zusatz eines Sprühklebstoffs. Haftklebebänder wären zwar in der Applikation einfacher, jedoch würden wie beim Sprühklebstoff Fremdmaterialien im Komposit verbleiben, sodass die Performance des Bauteils ebenfalls schlechter würde.

Aus der EP 2 229 421 B1 sind mit Klebstoff beschichtete Fasermatten, sog. "Prepregs" ("preimpregnated fibres"), bekannt, die Verwendung zur Herstellung von faserverstärkten Epoxiden finden. Kern der Erfindung ist, dass der Klebstoff teilvernetzt ist, wobei Partialester aus einem Epoxidharz mit einer ungesättigten Carbonsäure umgesetzt und teilvernetzt werden. Der Klebstoff ist in den Epoxidharzen des Infusionsprozesses quellbar und/oder anlösbar.

Prepregs, deren Herstellung und Verwendung sind in der WO 2013/107829 A1 ausführlich beschrieben. Es handelt sich dabei um textile Flächengebilde, die mit einem Reaktivharz imprägniert sind. Zur Herstellung der Lager- und Transportfähigkeit werden die Reaktivharze in der Regel angeliert, d.h. die Härtungsreaktion wird initiiert und in einem frühen Stadium gestoppt (sog. B-Zustand). Dabei tritt eine deutliche Viskositätserhöhung des Harzes auf, was das imprägnierte Gebilde handhabbar macht. Prepregs dieser Art sind haftklebrig und können somit bei Raumtemperatur zusammenlaminiert werden. Wie Klebebänder werden sie in der Regel mit Release-Linern eingedeckt, um sie stapelbar oder aufwickelbar zu gestalten. Nachteilig an diesem Stand der Technik ist, dass die angelierten Prepregs gekühlt gelagert werden müssen, um ein Weiterlaufen der Härtungsreaktion zu verhindern.

Die EP 2 229 421 B1 löst das Problem der kurzen Lagerfähigkeit von Prepregs im B-Zustand, indem ein textiles Halbzeug bereitgestellt wird, welches mit einem Haftklebstoff ausgerüstet ist. Dieser wird über einen radikalischen Prozess teilvernetzt. Der Haftklebstoff wird auf einem textilen Träger zur Verklebung verwendet. Im fertigen Bauteil bleiben sowohl das textile Gewebe als auch das teilvernetzte Polymer an der verklebten Stelle, wodurch Inhomogenitäten in der Vernetzungsdichte generiert werden.

Die WO 2012/026980 A2 beschreibt die Verwendung von haftklebrigen Sprühklebstoffen, um das Fließverhalten des im VARTM eingezogenen Epoxidharzes zu beeinflussen. Als Beispiele sind die kommerziell erhältlichen Klebstoff NuTack ® E, NuTack ® Blu, NidaTack ® NT sowie 3M™ Super 77™ genannt. Diese Sprühklebstoffe reduzieren die interlaminare Scherfestigkeit von Faserverbünden um mehr als 8%.

Die WO 1997/003828 A1 beschreibt faserverstärkte Schäume. Wie darin beschrieben, kann der Schaum z.B. mit einem Haftklebstoff versehen werden, um die Fasermatten zu fixieren. Problematisch ist, dass der Haftklebstoff als störender Faktor im ausgehärteten Bauteil verbleibt, weil er dessen Festigkeit negativ beeinflusst.

Deshalb schlägt die WO 2013/060588 A1 vor, zur temporären Fixierung der Fasermatten thermoplastische Klebstoffe zu verwenden, die das gleiche oder ein chemisch ähnliches Harz aufweisen wie das für den VARTM-Prozess verwendete Harz. Als vorteilhaft werden ungesättigte Polyester-. und Vinylester Harze beschrieben, die dann von styrolhaltigen Harzen im VARTM gelöst werden.

Vernetzbare Klebstoffe auf Basis von Epoxiden werden in der WO 2013/060588 A1 als nachteilig beschrieben, da diese dazu neigen eine Unterstruktur auszubilden, die sich negativ auf die Eigenschaften des Laminates auswirken. Für hochwertige Bauteile werden jedoch bevorzugt Epoxidharze im VARTM verwendet.

Ein zentraler Nachteil im aktuellen Stand der Technik ist die aufwendige Fixierung der Fasermatten mit Klebstoffen am Rand oder Sprühklebstoffen. Es werden zwar allgemein Haftklebstoffe zum Fixieren von z.B. Schäumen auf Fasermatten in solchen Infusionsprozessen beschrieben. Jedoch bewirken diese im Material verbleibenden Fremdstoffe Performanceeinbußen, die in anspruchsvollen Industrien wie beispielsweise der Luft- und Raumfahrt oder der Herstellung von Rotorblättern nicht toleriert werden können. Ein Flüssigklebstoff wird haftklebrig, wenn er eine gewisse Kohäsion mit sich bringt. Die Erhöhung der Kohäsion wird im Stand der Technik z.B. mit textilen Geweben und/oder durch UV-induzierte Vorvernetzung (EP 2 229 421 B1) oder durch die Verwendung thermoplastischer Klebstoffe (WO 2013/060588 A1), die erst bei erhöhten Temperaturen klebrig sind, erreicht.

Aufgabe der vorliegenden Erfindung war es daher, eine Möglichkeit bereitzustellen, Fasergebilde in der Epoxid-Kompositherstellung temporär zu fixieren, ohne die Performance der ausgehärteten Bauteile relevant negativ zu beeinflussen, wobei die Abweichung in der interlaminaren scheinbaren Scherfestigkeit des entstehenden Final-Fixier-Klebstoff/Temporär-Fixier-Klebstoff-Gemisches von derjenigen des reinen Final-Fixier-Klebstoffes weniger als 8%, bevorzugt weniger als 7%, insbesondere weniger als 5% beträgt. Besonders bevorzugt beträgt die Abweichung weniger als 3%. Dabei soll die temporäre Fixierung einfach möglich sein, eine geringe Fehleranfälligkeit aufweisen und dem Anwender möglichst große Freiheit im Design lassen.

Diese Aufgabe wird erfindungsgemäß dadurch gelöst, dass zur temporären Fixierung ein Klebeband eingesetzt wird, und zwar ein Klebeband der eingangs genannten Art, bei dem der Temporär-Fixier-Klebstoff ein unvernetzter Haftklebstoff ist, der sich im Zuge der zweiten finalen Fixierung im Final-Fixier-Klebstoff löst.

Sich lösen im Sinne dieser Anmeldung bedeutet, wenn sich nach der im Methodenteil beschriebenen Methode zur Bestimmung der Löslichkeit der Temporär-Fixier-Klebstoff zumindest teilweise im Final-Fixier-Klebstoff auflöst. Diese Definition nicht erfüllt hat ein Klebstoff, der sich lediglich vom Träger ablöst und optisch sichtbar im Final-Fixier-Klebstoff herumschwimmt.

Überraschenderweise konnte trotz der im Stand der Technik beschriebenen Nachteile von epoxidbasierten Klebstoffen ein unvernetzter (und somit lagerfähiger und löslicher) Haftklebstoff entwickelt werden. Dies gelingt, indem dem 2-Komponentenepoxidklebstoff die zweite Komponente (der Härter) nicht zugesetzt wird, d.h. der Epoxidklebstoff härterfrei ist, oder durch Verwendung von latenten Härtern wie beispielsweise Dicyandiamid. Werden latente Härter (und Beschleuniger) verwendet, so ist darauf zu achten, dass die Vernetzungsreaktion erst langsam im VARTM einsetzt, um eine Ausbildung von Unterstrukturen zu vermeiden.

Unvernetzt im Sinne dieser Anmeldung bezieht sich auf chemische Vernetzung und wird über die im Methodenteil beschriebene Methode zur Bestimmung des Gelwertes bestimmt. Alle Haftklebmassen mit Gelwerten kleiner 20 % sind im Sinne dieser Anmeldung unvernetzt.

Die Verwendung der Klebebänder ermöglicht es dem Anwender, den Klebstoff auf einfache Weise in gleichmäßiger Auftragsmenge auf die zu verklebenden Glasfasermatten aufzubringen. Dadurch dass es sich um einen unvernetzten Haftklebstoff handelt, ist eine Fixierung nicht zeitkritisch, da kein Aushärten des Klebstoffes erfolgt. Auch wird auf diese Weise die Voraussetzung für einen Klebstoff geschaffen, der eine Re-Positionierung der Glasfasermatten problemlos möglich macht. Da die Abweichung in der interlaminaren scheinbaren Scherfestigkeit eines Bauteils unter Verwendung des Final-Fixier-Klebstoff/Temporär-Fixier-Klebstoff-Gemisches von derjenigen eines Bauteils unter Verwendung des reinen Final-Fixier-Klebstoffes nur gering ist, sind keine Performanceeinbußen im fertigen Kompositmaterial zu befürchten. Die erfindungsgemäße Lösung ist außerdem sparsam, da durch die Verwendung eines Klebebandes nur die gewünschte Menge an Klebstoff aufgetragen wird, während bei der Dosierung des Sprühklebstoffes die Dosierung stark schwanken kann, wenn der Anwender den Klebstoff nicht sehr gleichmäßig aufträgt. Außerdem sind keine gesundheitsgefährdenden bzw. reizenden Lösungsmittel erforderlich, was gut für den Anwender ist.

Die Verwendung von sich im Final-Fixier-Klebstoff löslichen unvernetzten Transferklebebändern ermöglicht dem Anwender größtmögliche Designfreiheit, da der Eintrag an Fremdmaterial in Form von Trägern wie beispielsweise textilen Geweben vermieden wird.

Als Haftklebstoffe werden dabei Klebstoffe bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebstoffe wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit entsprechender Klebstoffe beruht auf ihren adhäsiven Eigenschaften und die Wiederablösbarkeit auf ihren kohäsiven Eigenschaften.

Der Temporär-Fixier-Klebstoff enthält mindestens ein Polymer und mindestens ein Reaktivharz, wobei der Temporär-Fixier-Klebstoff auf 100 Teile Polymer mindestens 104 Teile des mindestens einen Reaktivharzes enthält, und optional ein Klebharz.

Durch die Verwendung eines solchen Temporär-Fixier-Klebstoffes kann sichergestellt werden, dass die Abweichung in der interlaminaren scheinbaren Scherfestigkeit (ILSS) eines Bauteils unter Verwendung des entstehenden Final-Fixier-Klebstoff/Temporär-Fixier-Klebstoff-Gemisches von derjenigen eines Bauteils unter Verwendung des reinen Final-Fixier-Klebstoffes wenn überhaupt nur geringfügig abweicht, da das Gemisch zum ganz überwiegenden Teil ja die gleichen Eigenschaften aufweist wie der Final-Fixierklebstoff in Reinform. Die ILSS ist ein Maß für den Widerstand des Materials gegen Scherkräfte, die auf den Zusammenhalt zwischen den einzelnen Materialschichten einwirken.

Besonders bevorzugt liegt das mindestens eine Polymer des Temporär-Fixier-Klebstoffes als kontinuierliche Polymerphase vor.

"Kontinuierliche Polymerphase" bedeutet, dass das Polymer als kontinuierliche Phase vorliegt, in der das Reaktivharz gelöst und/oder dispergiert ist. Es wurde festgestellt, dass sich auf diese Weise Haftklebstoffe mit bis zu 85% Reaktivharzanteil realisieren lassen. Die Haftklebrigkeit wird dadurch generiert, dass die Polymere überraschenderweise trotz der hohen Epoxidanteile eine kontinuierliche Phase ausbilden, die für die für die Haftklebrigkeit benötigte Kohäsion sorgt.

Vorzugsweise liegen die Reaktivharze zumindest zum Teil homogen gelöst in der kontinuierlichen Phase vor. Auf diese Weise entsteht ein haftklebriges System. In einer besonders vorteilhaften Ausführungsform liegt das Reaktivharz vollständig homogen im Polymer gelöst vor. Ein daraus bestehendes Tape löst sich im VARTM besonders gut.

"Homogen gelöst" bedeutet dabei, dass im Rasterelektronenmikroskop keine unterschiedlichen Phasen zwischen gelöstem Stoff und lösendem Stoff erkennbar sind.

Besonders bevorzugt enthält der Temporär-Fixier-Klebstoff auf 100 Teile Polymer und ggf. Klebharz mindestens 120 Teile Reaktivharz, bevorzugt mindestens 200 Teile Reaktivharz, insbesondere mindestens 300 Teile Reaktivharz. "Teil" bezieht sich dabei auf Gewichtsteile. Die Formulierung "auf 100 Teile Polymer mindestens 120 Teile Reaktivharz" bedeutet, dass auf 100 g Polymer mindestens 120 g eingesetzt werden. Sofern auch Klebharz enthalten ist, werden die Teile an Polymer und Klebharz zusammengefasst. Dabei beziehen sich die Angaben, sofern mehr als ein Reaktivharz eingesetzt wird, auf die Summe der Gewichtsteile der Reaktivharze, sofern mehr als ein Polymer eingesetzt wird, auf die Summe der Gewichtsteile der eingesetzten Polymere, ggf. zuzüglich der Menge des Klebharzes oder der Summe der Gewichtsteile der eingesetzten Klebharze.

Als Reaktivharz kommt ein Epoxidharz zum Einsatz. Im VARTM werden Epoxidharze verwendet. Zum einen löst sich gleiches (Reaktivharz) in gleichem leichter, zum anderen wird der Einfluss auf die interlaminare Scherfestigkeit besonders gering gehalten, da die gelösten Epoxide aus dem Temporär-Fixier-Klebstoff mitvernetzen und somit keinen Störfaktor darstellen. Dabei wird als Reaktivharz mindestens ein Epoxidharz auf Basis von Bisphenol-A, Bisphenol-S, Bisphenol-F, einem Epoxy-Novolak, einem Epoxy-Kresol-Novolak oder einem epoxidierten Nitrilkautschukverwendet.

Der Final-Fixier-Klebstoff ist auf Basis mindestens eines Epoxidharzes aufgebaut, und der Temporär-Fixier-Klebstoff enthält die gleiche Reaktivharzklasse wie das Reaktivharz des Final-Fixier-Klebstoffs.

Auch für den Final-Fixier-Klebstoff ist als Reaktivharz mindestens ein Epoxidharz auf Basis von Bisphenol-A, Bisphenol-S, Bisphenol-F, einem Epoxy-Novolak, einem Epoxy-Kresol-Novolak oder einem epoxidierten Nitrilkautschuk besonders bevorzugt.

"Auf der Basis von" oder "auf der Grundlage von" bedeutet vorliegend, dass die Eigenschaften der Klebemasse zumindest stark von den grundlegenden Eigenschaften dieser Komponente (dem so genannten "Basisharz") bestimmt werden, wobei selbstverständlich nicht ausgeschlossen ist, dass diese durch Verwendung von modifizierenden Hilfs- oder Zusatzstoffen oder von weiteren Polymeren in der Zusammensetzung zusätzlich beeinflusst werden. Insbesondere kann dies bedeuten, dass der Anteil des Basisharzes an der Gesamtmasse der Klebemasse mehr als 50 Gew.-% beträgt.

Das Polymer kann ein Polymer sein, aber auch eine Mischung von zwei oder mehr verschiedenen Polymeren sein. Dabei kann das mindestens eine Polymer insbesondere ein Elastomer oder ein Thermoplast sein.

Beispiele für Polymere sind Elastomere wie sie im Bereich der Haftklebstoffe üblicherweise verwendet werden, wie sie zum Beispiel in dem "Handbook of Pressure Sensitive Adhesive Technology" von Donatas Satas (Satas & Associates, Warwick 1999), beschrieben sind.

Dies sind zum Beispiel Elastomere auf der Basis von Acrylaten und/oder Methacrylaten, Polyurethanen, Naturkautschuken, Synthesekautschuken wie Butyl-, (Iso)Butyl-, Nitril- oder Butadienkautschuke, Styrolblockcopolymeren mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke), Polyolefinen, Fluorpolymeren und/oder Silikonen.

Besonders bevorzugt im Sinne der Erfindung sind Kautschuk oder Synthesekautschuk oder daraus erzeugte Verschnitte. Kommen diese als Basismaterial für den Temporär-Fixier-Klebstoff zum Einsatz, dann kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) oder der Polyurethane und/oder deren Verschnitten gewählt werden.

Als das mindestens eine Polymer kann auch jegliche dem Fachmann bekannte Art von Thermoplasten zum Einsatz kommen, wie sie zum Beispiel in den Lehrbüchern "Chemie und Physik der synthetischen Polymere" von J.M.G. Cowie (Vieweg, Braunschweig) und "Makromolekulare Chemie" von B. Tieke (VCH Weinheim, 1997) genannt sind. Dies sind zum Beispiel Poly(ethylen), Poly (propylen), Poly (vinylchlorid), Poly (styrol), Poly (oxymethylene), Poly (ethylenoxid), Poly (ethylenterephthalat), Poly (carbonate), Poly (phenylenoxide), Poly (urethane), Poly(harnstoffe), Acrylnitril-Butadien-Styrol (ABS), Poly(amide) (PA), Poly (lactat) (PLA), Poly (etheretherketon) (PEEK), Poly (sulfon) (PSU), Poly (ethersulfon) (PES). Poly (acrylate), Poly (methacrylate) und Poly (methylmethacrylate) (PMMA) sind zwar als Polymer ebenfalls möglich, jedoch nicht bevorzugt im Sinne der vorliegenden Erfindung.

Die Auswahl der Polymerkomponente ist abhängig vom gewählten Epoxidsystem. Werden polare Epoxide (häufig durch Reaktion von Alkoholen mit Epichlorhydrin hergestellt, wie beispielsweise das Reaktionsprodukt aus Bisphenol-A und Epichlorhydrin) verwendet, sind insbesondere polarere Polymere bevorzugt. Diese umfassen sowohl Elastomere wie Acrilnitril-Butadien-Kautschuke als auch Thermoplasten wie Poly (ethylenoxid), Poly (ethylenterephthalat), Poly (carbonate), Poly (phenylenoxide), Poly (urethane), Poly(harnstoffe), Poly(amide) (PA), Poly (lactat) (PLA), Poly (etheretherketon) (PEEK), Poly (sulfon) (PSU), Poly (ethersulfon) (PES).

Für unpolarere Epoxide wie beispielsweise Dicyclopentadiendiepoxid sind unpolarere Polymere bevorzugt. Diese sind beispielsweise Poly (Styrol), Styrolblockcopolymere mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke) oder thermoplastische Polyolefine, Fluorpolymere und/oder Silikonen.

Um Temporär-Fixier-Klebstoffe mit besonders hohen Epoxidgehalten zu erhalten, eignen sich besonders alle Polymere, die nicht intrinsisch haftklebrig sind also nicht das Dahlquist Kriterium bei Raumtemperatur erfüllen (vgl. J. Adhesion, 1991, Vol. 34, pp. 189-200 oder C. A. Dahlquist: Tack, adhesion, fundamentals and pra.ctice, McLaren and Sons Ltd., London, 1966). Dies gilt sowohl für die Polymerkomponente wie auch die Mischung aus Polymer und Klebharz, so ein solches zum Einsatz kommt. Obwohl also Polymer und ggf. Klebharz per se nicht haftklebrig sind, ist der resultierende Temporär-Fixier-Klebstoff der Klebebänder haftklebrig.

Mindestens ein Polymer ist ausgewählt aus der Gruppe bestehend aus Poly (amide)n, Polyurethanen, Nitril-Butadien-Kautschuken, Poly (etheretherketon) (PEEK), Poly (sulfon) (PSU) und Poly (ethersulfon) (PES). Diese ermöglichen Haftklebstoffe mit sehr hohen Reaktivharzanteilen, was besonders vorteilhaft für die fertigen Bauteile ist, da der Anteil an nicht vernetzenden Polymeren besonders niedrig ist. Nitrilkautschuke sind dabei für die vorliegende Erfindung insbesondere geeignet.

Kommen Polyurethane zum Einsatz, so haben sich diese als besonders vorteilhaft für gute Klebkräfte im unausgehärteten Zustand gezeigt, wenn das Polyurethan teilkristallin ist und in der DSC Messung einen Schmelze- oder Kristallisationspeak aufweist, der einer Schmelzenthalpie von mindestens 5 J/g, bevorzugt von 20 J/g und besonders bevorzugt von 40 J/g entspricht.

Die Polymere der Polymermischung können von linearer, verzweigter, sternförmiger oder gepfropfter Struktur sein, um nur einige Beispiele zu geben, und als Homopolymer, als statistisches Copolymer, als alternierendes oder als Blockcopolymere aufgebaut sein. Die Bezeichnung "statistisches Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten in den Polymerketten vorkommen. Einzelne Polymerblöcke können als Copolymerblock (statistisch oder alternierend) aufgebaut sein.

Für die vorliegende Erfindung können Klebharze verwendet werden, jedoch ist für die Temporär-Fixier-Klebstoffe der vorliegenden Erfindung ein Klebharz entbehrlich. Es wird auch ohne Klebharzzusatz die gewünschte Haftklebrigkeit der Klebemasse erreicht. Da gewünscht ist, dass der Temporär-Fixier-Klebstoff dem Final-Fixier-Klebstoff chemisch möglichst ähnlich ist und letzterer üblicherweise keine Klebharze enthält, ist es bevorzugt, dass der Temporär-Fixier-Klebstoff keine Klebharze enthält.

Als Reaktivharze, die auch als vernetzbare Komponenten bezeichnet werden, können im Prinzip alle, dem Fachmann im Bereich der Haftklebstoffe oder Reaktivklebstoffe bekannten, in einer Aufbaureaktion vernetzenden Makromoleküle bildenden reaktiven Konstituenten verwendet werden, wie sie zum Beispiel in Gerd Habenicht: Kleben - Grundlagen, Technologien, Anwendungen, 6. Auflage, Springer, 2009, beschrieben sind.

Der Aufbau und die chemische Beschaffenheit der vernetzbaren Komponente sind nicht kritisch, solange die Aufbaureaktion unter Bedingungen, insbesondere hinsichtlich der angewendeten Temperaturen, Art der verwendeten Katalysatoren und dergleichen, durchgeführt werden kann, die zu keiner wesentlichen Beeinträchtigung und/oder Zersetzung der Polymerphase führen, wobei sie vorzugsweise mit der Elastomerphase zumindest teilweise mischbar sind.

Epoxidhaltige Materialien bzw. Epoxidharze, die in den Zusammensetzungen der Erfindung nützlich sind, sind beliebige organische Verbindungen mit wenigstens einem Oxiranring, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloali-phatisch oder aromatisch sein. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert. Die polymeren Epoxide umfassen lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht des epoxidhaltigen Materials kann von 58 bis etwa 100.000 g/mol oder mehr variieren. Mischungen aus verschiedenen epoxidhaltigen Materialien können auch in den Hotmelt-Zusammensetzungen der Erfindung verwendet werden. Nützliche epoxidhaltige Materialien umfassen jene, die Cyclohexenoxidgruppen, wie die Epoxycyclohexancarboxylate, die durch 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat exemplifiziert sind, enthalten. Für eine detailliertere Liste von nützlichen Epoxiden dieser Art kann auf U.S. Patent Nr. 3,117,099 verwiesen werden.

Weitere epoxidhaltige Materialien, die bei der Anwendung dieser Erfindung besonders nützlich sind, umfassen Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in U.S. Patent Nr. 3,018,262 beschrieben.

Es gibt eine Vielzahl an im Handel erhältlichen epoxidhaltigen Materialien, die in dieser Erfindung verwendet werden können. Insbesondere umfassen Epoxide, die leicht erhältlich sind, Octadecylenoxid, Epichlorhydrin, Styroloxid, Vinylcyclohexenoxid, Glycidol, Glycidylmethacrylat, Diglycidylether von Bisphenol A (z. B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z. B. ARALDITE GY281 von Ciba-Geigy), Vinylcyclohexendioxid (z. B. ERL 4206 von Union Carbide Corp.), 3,4-Ep-oxycyclohexylmethyl-3,4-epoxycyclohexen-carboxylat (z. B. ERL-4221 von Union Carbide Corp.), 2-(3,4-Epo-xycyclohexyl-5,5-spiro-3,4-epoxy)cyclohexan-metadioxan (z. B. ERL-4234 von Union Carbide Corp.), Bis(3,4-epoxycyclohexyl)adipat (z. B. ERL-4299 von Union Carbide Corp.), Dipentendioxid (z. B. ERL-4269 von Union Carbide Corp.), epoxidiertes Polybutadien (z. B. OXIRON 2001 von FMC Corp.), silikon-harzhaltige Epoxidfunktionalität, Epoxysilane (z. B. beta-(3,4-Epoxycyclohexyl)ethyltrimethoxysilan und gamma-Glycido-xypropyltrimethoxysilan, im Handel erhältlich von Union Carbide), feuerhemmende Epoxidharze (z. B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z. B. DEN-431 und DEN-438 von Dow Chemical Co.).

Vorzugsweise weist das Reaktivharz des Temporär-Fixier-Klebstoffes die gleiche Epoxid-Basis auf wie der Final-Fixier-Klebstoff. Je ähnlicher sich Temporär-Fixier-Klebstoff und Final-Fixier-Klebstoff chemisch sind, umso geringer werden die Abweichungen in der ILSS sein. "Ähnlich" bedeutet dabei, dass beispielsweise bei der Verwendung von Bisphenol-A basierten Epoxiden im Final-Fixier-Klebstoff auch in der Temporär-Fixier-Klebstoff Zusammensetzung Reaktivharze auf Bisphenol-A-Basis verwendet werden. Diese können exakt gleich sein oder sich leicht im Molekulargewicht unterscheiden.

Besonders bevorzugt ist daher das Reaktivharz des Temporär-Fixier-Klebstoffes das gleiche wie das des Final-Fixier-Klebstoffes.

Der Temporär-Fixier-Klebstoff des Klebebandes kann einen Härter oder Initiator enthalten. Dies ist allerdings nicht erforderlich, da der Final-Fixier-Klebstoff einen Härter oder Initiator enthält. Vorzugsweise ist der Temporär-Fixier-Klebstoff, wie oben erwähnt, jedoch härterfrei. Der Temporär-Fixier-Klebstoff des Klebebandes kann darüber hinaus auch einen Beschleuniger enthalten. Wie im Falle des Härters ist auch dies jedoch nur von untergeordneter Bedeutung, da die Einstellung der Vernetzungsreaktion des Reaktivharzes über den Final-Fixier-Klebstoff erfolgt.

Optional kann der Temporär-Fixier-Klebstoff weitere Additive, Rheologiemodifizierer, Schäumungsmittel, Füllstoffe oder Adhäsionsvermittler enthalten.

Ein Klebeband ist dann besonders geeignet, wenn die Klebkraft des ungehärteten Klebstoffes auf Stahl mindestens 1 N/cm beträgt. Damit sind gute haftklebrige Eigenschaften gegeben.

Der allgemeine Ausdruck "Klebeband" umfasst ein Trägermaterial, welches ein- oder beidseitig mit einer (Haft)klebemasse versehen ist. Vorzugsweise ist der Träger aus dem gleichen oder zumindest einem sehr ähnlichen Material wie das Fasergewebe des Kompositmaterials, damit es dessen Eigenschaften nicht verändert. Um Unebenheiten möglichst zu minimieren, sollte der Träger eine kleinstmögliche Stärke aufweisen.

Insbesondere umfasst der Ausdruck "Klebeband" im Sinne der vorliegenden Erfindung jedoch sogenannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder antiadhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen haftklebrigen trägerlosen Transferklebeband wird eine in Positionierung und Dosierung sehr genaue Verklebung ermöglicht.

Es sind auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Wie vorstehend erwähnt sollte im Falle des Einsatzes bei der Herstellung von Kompositmaterialien, bei denen der Träger im Komposit verbleibt, der Träger dem verwendeten Fasermaterial möglichst ähnlich sein oder mit diesem übereinstimmen. Eine geringestmögliche Trägerdicke ist dabei zu bevorzugen.

Die Dicke des Haftklebstoffes, der entweder als Transferklebeband oder auf einem flächigen Gebilde beschichtet vorliegt, beträgt bevorzugt zwischen 1 µm und 100 µm, weiter bevorzugt zwischen 5 µm und 50 µm und besonders bevorzugt zwischen etwa 10 µm und 30 µm.

Für die Anwendung bei der Herstellung von Rotorblättern beträgt die bevorzugte Schichtdicke von 10 µm bis 30 µm. Hierbei ist die Schichtdicke umso geringer zu wählen, je weniger Epoxide in dem Temporär-Fixier-Klebstoff enthalten sind, da ein geringerer Epoxid-Anteil im Klebstoff einen größeren negativen Effekt auf die ILSS hat. Hat der Temporär-Fixier-Klebstoff hingegen einen höheren Epoxid-Gehalt, so ist nur ein geringer oder quasi kein negativer Einfluss auf die ILSS gegeben und es ist möglich, auch eine stärkere Schichtdicke des Temporär-Fixierklebstoffes zu verwenden.

Die Erfindung betrifft außerdem die Verwendung des Klebebandes zur temporären Fixierung von Fasergebilden in der Kompositherstellung. Typische Anwendungsbereiche sind die Automobilindustrie, der Flugzeug- und Bootsbau sowie Rotoren für Windkraftanlagen. Insbesondere bei Rotoren für Windkraftanlagen sind Fasermatten von sehr großen Dimensionen in einer Form temporär zu fixieren, was große Schwierigkeiten bereitet, da es leicht zu Verwerfungen und Unebenheiten kommt. Durch das Klebeband wird eine temporäre Fixierung auf einfache und kostengünstige Weise ermöglicht, ohne dass diese temporäre Fixierung nennenswerte Einbußen in der Qualität des fertigen Produktes mit sich bringt.

Besonders bevorzugt wird das Klebeband zur temporären Fixierung von Fasergebilden in Vakuum-Harz-Infusionsprozessen eingesetzt, wobei das Harz für den Vakuum-Harz-Infusionsprozess ausgewählt ist aus der Gruppe der Epoxidharze. Epoxidharze sind für Vakuum-Harz-Infusionsprozesse besonders vorteilhaft, weil die Fertigbauteile unter Verwendung von Epoxidharzen besonders gute Eigenschaften in Bezug auf die ILSS aufweisen.

Die vorliegende Erfindung betrifft ein Verfahren zum Herstellen eines Komposits aus Fasergebilden und einem Final-Fixierklebstoff, umfassend die Schritte
- temporäres Fixieren der Fasergebilde in einer Form sowie untereinander mit dem Klebeband enthaltend einen Temporär-Fixier-Klebstoff;
- Einfüllen des Final-Fixier-Klebstoffes unter Auflösen des Temporär-Fixier-Klebstoffes des Klebebandes im Final-Fixier-Klebstoff; und
- Aushärten des Final-Fixier-Klebstoffes.

Vorzugsweise erfolgt das Einfüllen des Final-Fixier-Klebstoffes durch einen Harz-Infusionsprozess, der auch Vakuum-Infusionsprozess genannt wird. Hierbei werden Glasfasermatten großflächig in der gewünschten Form ausgelegt und dann werden unter Vakuum Epoxidharze eingesaugt.

Das temporäre Fixieren mit dem Klebeband ermöglicht ein sehr einfaches, genaues, korrigierbares zwischenzeitliches Fixieren der Glasfasermatten zum einen an der Form, zum anderen der Glasfasermatten untereinander. Das temporäre Fixieren mittels Klebeband weist gegenüber der herkömmlichen Fixierung mit einem Sprühklebstoff zahlreiche Vorteile auf. So gibt es kein Lösungsmittel, das verdampfen muss bzw. kann, was zu gesundheitlichen Beeinträchtigungen beim Anwender führen würde. Das Dosieren ist vereinfacht, da stets eine festgelegte Menge aufgebracht wird und es nicht vom Geschick und der Genauigkeit des Anwenders abhängt, welche Klebstoffmenge in welchem Bereich aufgetragen wird. Darüber hinaus ist keine Trockenzeit erforderlich, da kein Lösungsmittel verdampfen muss, was zu einem erheblichen Zeitgewinn in der Herstellung führt.

### Beispiele

### Messmethoden

### Gelwertbestimmung

Hierzu wurden Klebebandproben in Stücken von 20 cm² ausgestanzt und in einem Beutel aus Polyethylen-Spinnvlies (Tyvek der Firma Du Pont mit einem Flächengewicht von ca. 55 g/cm²) eingeschweißt. Die Muster wurden 3 Tage unter Schütteln bei Raumtemperatur mit Butanon extrahiert. Das Butanon wurde täglich gewechselt. Nach erfolgter Extraktion wurden die Proben bei 110 °C getrocknet. Der Gelanteil wurde durch Differenzwägungen bestimmt, wobei die Extraktionsverluste des Spinnvlieses und des Trägers berücksichtigt wurden. Aus der Differenz der Probengewichte vor der Extraktion und nach der Extraktion wird der Gelwert als prozentuale Angabe des Gewichtsanteils des Polymers, das nicht mit Butanon extrahierbar ist, bestimmt.

### Löslichkeit von Haftklebmassen in Final-Fixier-Klebstoffen

Als Final-Fixier-Klebstoff wurde Epon Resin 828 der Firma Momentive (Bisphenol-A Epichlorhydrin Reaktionsprodukt) ausgewählt.

In einem 250 mL Glasgefäß wurde Epon Resin 828 unter Rühren mit einem Magnetrührer auf 40°C ± 1°C erwärmt. Für den Test wurde die zu testende Haftklebmasse auf geätztes PET laminiert und für 24 h im gerührten Epon Resin 828 gelöst. Die Bewertung erfolgte optisch nach folgenden Kriterien:

| | |
|---|---|
| löst sich: | auf dem PET sind keine Klebebandreste mehr vorhanden |
| teilweise gelöst: | Teile des PET-Trägers sind nicht mehr mit Klebmasse bedeckt |
| quillt: | die Schichtdicke des Klebebandes hat zugenommen aber der PET-Träger ist noch vollständig mit Klebemasse bedeckt |
| löst sich nicht: | der PET-Träger ist noch vollständig mit Klebemasse bedeckt |

### Molekulargewicht:

Die Molekulargewichtsbestimmungen der zahlenmittleren Molekulargewichte Mₙ und der gewichtsmittleren Molekulargewichte M_{w} erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

### Interlaminare scheinbare Scherfestigkeit (ILSS):

Zur Prüfung der Proben wurde das 100 kN Servohydraulik-Prüfsystem von Inova und zur Datenerfassung ein MGC Plus von HBM (Hottinger Baldwin Messtechnik) verwendet. Die Messrate lag bei 20 Hz.

Für die Versuche wurde die Versuchsapparatur nach EN ISO 14130 verwendet (Abbildung 3). Mit diesem Versuchsaufbau wird die interlaminare scheinbare Scherfestigkeit bestimmt. Der Aufbau ähnelt prinzipiell dem des Dreipunktbiegeversuchs. Es werden jedoch sehr kleine Proben verwendet, um interlaminares Versagen hervorzurufen.

### Verwendete Rohstoffe:

| | |
|---|---|
| Breon N41H80 | Nitril-Butadien-Kautschuk mit einem Acrylnitrilanteil von 41% von Zeon Chemicals (London, UK) |
| Desmomelt 530 | Weitgehend lineares Hydroxylpolyurethan. Desmomelt 530 ist ein stark kristallisierendes, elastisches Polyurethan sehr geringer Thermoplastizität der Firma Bayer MaterialScience |
| Epon Resin 828 | Difunktionelles Bisphenol-A / epichlorhydrin Flüssigepoxid mit einem Gewicht pro Epoxid von 185 - 192 g/eq der Firma Momentive. |
| PolyDis PD3611 | Nitrilkautschukmodifiziertes Epoxidharz auf der Basis von Bisphenol-F-diglycidylether mit einem Elastomergehalt von 40% und einem Gewicht pro Epoxid von 550 g/eq der Firma Schill + Seilacher "Struktol". |
| PolyDis PD3691 | Nitrilkautschukmodifiziertes Epoxidharz auf der Basis von Bisphenol-A-diglycidylether mit einem Elastomergehalt von 5% und einem Gewicht pro Epoxid von 205 g/eq der Firma Schill + Seilacher "Struktol". |
| Butanon | Lösungsmittel |

| **Beispiel:** | **K1** Gew.teile | **K2** Gew.teile | **K3** Gew.teile | **K4** Gew.teile | **K5** Gew.teile | **V1** Gew.teile |
|---|---|---|---|---|---|---|
| Breon N41H80 | 20 | 20 | - | - | 50 | 65 |
| Desmomelt 530 | - | - | 20 | 30 | - | - |
| Epon Resin 828 | 80 | - | 80 | 70 | 50 | 30 |
| PolyDis PD3611 | - | 65 | - | - | - | |
| PolyDis PD3691 | - | 15 | - | - | - | 5 |

Die entsprechenden Rohstoffe wurden in Butanon gelöst bzw. Breon im Kneter mit Lösungsmittel vorgelöst. Der Feststoffgehalt betrug zwischen 40% und 50%.
Es wurden Laborausstriche auf silikonisiertem PET hergestellt und das Lösungsmittel abdampfen gelassen.

Die haftklebrigen Fixiermittel wurden mit einer Referenz (ohne Fixiermittel) und 2 Wettbewerbsprodukten (Sprühklebstoff Aerofix 2 und 3M 11095) verglichen. Die Proben haben vier Glasfaserlagen und zwischen jeder Lage wurde Fixiermittel appliziert. Die Sprühklebstoffmenge betrug 10 bis 15 g/m². Die haftklebrigen Tapes waren zwischen 20 µm und 30 µm dick.

Die Probenplatten wurden mit Hilfe des VARTM (vacuum-assisted resin transfer moulding) hergestellt. Es wurde ein 812g/m² Biaxgelege (Batchnummer 1012299) von der Firma Saertex verwendet. Laminiert wurden die Platten mit dem Epoxidsystem RIM 135 von Momentive (Batchnummer SG1CO197) und dem Härter RIM137 (Batchnummer SG1BO364) bei 40 °C und unter einem absoluten Druck von 2 mbar. Anschließend wurden die Proben zugeschnitten und im Temperofen 10 Stunden lang bei einer Temperatur von 70 C getempert.

### Ergebnisse aus Lösungstest:

| | **K1** | **K2** | **K3** | **K4** | **K5** | **V1** |
|---|---|---|---|---|---|---|
| löst sich | x | x | x | x | x | |
| teilweise gelöst | | | | | | x |
| quillt | | | | | | |
| ungelöst | | | | | | |

| | | | | | | |
|---|---|---|---|---|---|---|
| * in keinem der Fälle wurde ein ungelöster Rückstand im Epoxid-Extraktionsmittel gefunden, welcher auf ein Ablösen einer vernetzten Masse zurückzuführen wäre | | | | | | |

### Gelwerte

| | **K1** | **K2** | **K3** | **K4** | **K5** | **V1** |
|---|---|---|---|---|---|---|
| Gelwert | 1% | 0% | 0% | 1% | 0% | 2% |

### Probengeometrie und Prüfung

Für die ILSS-Prüfung sind nach EN ISO 14130 die Proben und deren Geometrie abhängig von der Laminatdicke. Ein Probekörper hat die zehnfache Dicke als Länge und fünffache Dicke als Breite. Der Abstand der Auflage (Druckfinnen) entspricht ebenfalls der fünffachen Dicke. Laut Prüfnorm EN ISO 14130 muss darauf hingewiesen werden, dass das ermittelte Prüfergebnis kein absoluter Wert ist. Deshalb wird zur Definition der gemessenen Größen die Benennung "scheinbare interlaminare Scherfestigkeit" verwendet.

### Messwerte:

| **Beispiel:** | **K1** | **K2** | **K3** | **K4** | **K5** | **V1** | **SK1** | **SK2** | **R** |
|---|---|---|---|---|---|---|---|---|---|
| ILSS / MPa | 29,63 | 29,82 | 28,67 | 28,29 | 28,34 | 26,51 | 21,32 | 27,05 | 29,75 |
| delta (ILSS) / % | -0,4 | + 0,2 | - 3,6 | - 4,9 | - 4,7 | -10,9 | -28,3 | - 9,1 | |

| | | | | | | | | | |
|---|---|---|---|---|---|---|---|---|---|
| **delta (ILSS):** prozentuale Änderung des ILSS im Vergleich zur Referenz in der die Fasermatten ohne Klebstoff fixiert wurden. R: Referenzbauteil ohne Verwendung von Fixierungsklebstoffen. Kommerzielle Spühklebstoffe **SK1** (Aerofix 2 der Firma Cytec), **SK2** (Adjustable Composite Positioning System11095 der Firma 3M) | | | | | | | | | |

Es zeigt sich, dass die Temporär-Fixier-Klebstoffe K1 bis K5 gegenüber dem Vergleichsbeispiel deutlich geringere Abweichungen in der ILSS aufweisen. Dabei ist die Abweichung umso geringer, je höher der Epoxid-Anteil ist (vgl. K1 im Gegensatz zu K5, K3 gegenüber K4). Ferner zeigt sich, dass die Verwendung von Nitrilkautschuk als Polymerkomponente bessere Ergebnisse liefert als die Verwendung von Polyurethanen (vgl. K1 gegenüber K3). Die Abweichungen gegenüber den Referenzsprühklebstoffen des Standes der Technik (SK1 und SK2) sind erheblich.

## Patentansprüche

1. Verfahren zum Herstellen eines Komposits aus Fasergebilden und einem Klebeband enthaltend einen Final-Fixier-Klebstoff, umfassend die Schritte
- temporäres Fixieren der Fasergebilde in einer Form sowie untereinander mit einem Klebeband;
- Einfüllen des Final-Fixier-Klebstoffes unter Auflösen des Temporär-Fixier-Klebstoffes im Final-Fixier-Klebstoff; und
- Aushärten des Final-Fixier-Klebstoffes,
wobei das Klebeband enthält einen Temporär-Fixier-Klebstoff für eine erste temporäre Fixierung zweier Substrate aneinander als Vorstufe einer zweiten finalen Fixierung der beiden Substrate, wobei die zweite finale Fixierung mittels eines Final-Fixier-Klebstoffes erfolgt und dieser Final-Fixier-Klebstoff den Temporär-Fixier-Kleb¬stoff im Zuge der zweiten finalen Fixierung aufnimmt,
der Temporär-Fixier-Klebstoff ein unvernetzter Haftklebstoff ist, also einen Gelwert von kleiner 20 % aufweist, gemessen nach der in der Offenbarung beschriebenen Methode, und er sich im Zuge der zweiten finalen Fixierung im Final-Fixier-Klebstoff löst,
**dadurch gekennzeichnet, dass**
der Temporär-Fixier-Klebstoff Folgendes enthält:
- mindestens ein Polymer, ausgewählt aus der Gruppe bestehend aus Polyurethanen, Nitril-Butadien-Kautschuken, Polyamiden, Poly(etheretherketon) (PEEK), Poly(sulfon) (PSU), und Poly(ethersulfon) (PES)
- optional ein Klebharz
- mindestens ein Reaktivharz, wobei als Reaktivharz mindestens ein Epoxidharz auf Basis von Bisphenol-A, Bisphenol-S, Bisphenol-F, einem Epoxy-Novolak, einem Epoxy-Kresol-Novolak oder einem epoxidierten Nitrilkautschuk enthalten ist, wobei der Temporär-Fixier-Klebstoff auf 100 Teile Polymer und Klebharz mindestens 104 Teile, bevorzugt mindestens 120 Teile Reaktiv¬harz, besonders bevorzugt mindestens 200 Teile Reaktivharz, insbesondere mindestens 300 Teile des mindestens einen Reaktivharzes enthält,
und wobei der Final-Fixier-Klebstoff auf Basis mindestens eines Epoxidharzes aufgebaut ist und der Temporär-Fixier-Klebstoff die gleiche Reaktivharzklasse wie das Reaktivharz des Final-Fixier-Klebstoffs enthält.

2. Verfahren nach Anspruch 1, **dadurch gekennzeichnet, dass** das mindestens eine Polymer im Temporär-Fixier-Klebstoff als kontinuierliche Polymerphase vorliegt.

3. Verfahren nach einem der Ansprüche 1 oder 2, **dadurch gekennzeichnet, dass** das mindestens eine Polymer ein Elastomer oder ein Thermoplast ist.

4. Verfahren nach einem der Ansprüche 1 bis 3, **dadurch gekennzeichnet, dass** das mindestens eine Reaktivharz in der kontinuierlichen Polymerphase zumindest zum Teil, vorzugsweise vollständig, homogen gelöst vorliegt.

5. Verfahren nach einem der Ansprüche 1 bis 4, wobei das Klebeband trägerlos als Transferklebeband vorliegt.

6. Verfahren nach Anspruch 1, **dadurch gekennzeichnet, dass** das Einfüllen des Final-Fixier-Klebstoffes durch einen Harz-Infusionsprozess erfolgt.

## Claims

1. Method for producing a composite of fibrous structures and an adhesive tape comprising a final fixing adhesive, comprising the steps of
- temporarily fixing the fibrous structures in a mould and also to one another with an adhesive tape;
- introducing the final fixing adhesive, with dissolution of the temporary fixing adhesive in the final fixing adhesive; and
- curing the final fixing adhesive,
where the adhesive tape comprises a temporary fixing adhesive for a first, temporary fixing of two substrates to one another as the preliminary stage to a second, final fixing of the two substrates, the second, final fixing taking place by means of a final fixing adhesive, and this final fixing adhesive absorbing the temporary fixing adhesive in the course of the second, final fixing,
and where the temporary fixing adhesive is a non-crosslinked pressure-sensitive adhesive, thus having a gel index of less than 20%, measured by the method described in the disclosure, and it dissolves in the final fixing adhesive in the course of the second, final fixing,
**characterized in that**
the temporary fixing adhesive comprises the following:
- at least one polymer selected from the group consisting of polyurethanes, nitrile-butadiene rubbers, polyamides, poly(etheretherketone) (PEEK), poly(sulfone) (PSU) and poly(ethersulfone) (PES)
- optionally a tackifying resin
- at least one reactive resin, the reactive resin comprising at least one epoxy resin based on bisphenol A, bisphenol S, bisphenol F, an epoxy Novolac, an epoxy-cresol Novolac or an epoxidized nitrile rubber, where the temporary fixing adhesive comprises at least 104 parts, preferably at least 120 parts, of reactive resin, more preferably at least 200 parts of reactive resin, more particularly at least 300 parts of the at least one reactive resin, per 100 parts of polymer and tackifying resin,
and where the final fixing adhesive is constructed on the basis of at least one epoxy resin, and the temporary fixing adhesive comprises the same class of reactive resin as the reactive resin of the final fixing adhesive.

2. Method according to Claim 1, **characterized in that** the at least one polymer is present as a continuous polymer phase in the temporary fixing adhesive.

3. Method according to one of Claims 1 and 2, **characterized in that** the at least one polymer is an elastomer or a thermoplastic.

4. Method according to one of Claims 1 to 3, **characterized in that** the at least one reactive resin is present as an at least partly, preferably completely, homogenous solution in the continuous polymer phase.

5. Method according to any of Claims 1 to 4, the adhesive tape being in carrier-less form as an adhesive transfer tape.

6. Method according to Claim 1, **characterized in that** the final fixing adhesive is introduced by means of a resin infusion process.

## Revendications

1. Procédé pour la préparation d'un composite à partir de structures fibreuses et d'un ruban adhésif contenant un adhésif de fixation finale, comprenant les étapes de
- fixation temporaire des structures fibreuses dans un moule ainsi que l'une avec l'autre avec un ruban adhésif ;
- remplissage de l'adhésif de fixation finale avec dissolution de l'adhésif de fixation temporaire dans l'adhésif de fixation finale ; et
- durcissement de l'adhésif de fixation finale,
le ruban adhésif contenant un adhésif de fixation temporaire pour une première fixation temporaire de deux substrats l'un contre l'autre en tant que précurseur d'une deuxième fixation finale des deux substrats, la deuxième fixation finale étant réalisée au moyen d'un adhésif de fixation finale et cet adhésif de fixation finale absorbant l'adhésif de fixation temporaire à la suite de la deuxième fixation finale,
l'adhésif de fixation temporaire étant un autoadhésif non réticulé, qui présente ainsi une valeur de gel inférieure à 20 %, mesurée d'après la méthode décrite dans la description, et il se dissout dans l'adhésif de fixation finale à la suite de la deuxième fixation finale,
**caractérisé en ce que**
l'adhésif de fixation temporaire contient ce qui suit :
- au moins un polymère, choisi dans le groupe constitué par des polyuréthanes, des caoutchoucs de nitrile-butadiène, des polyamides, une poly(étheréthercétone) (PEEK), une poly(sulfone) (PSU) et une poly(éthersulfone) (PES)
- éventuellement une résine adhésive
- au moins une résine réactive ; au moins une résine époxy à base de bisphénol A, de bisphénol S, de bisphénol F, d'une époxy-novolak, d'une époxy-crésol-novolak ou d'un caoutchouc au nitrile époxydé étant contenue en tant que résine réactive, l'adhésif de fixation temporaire contenant au moins 104 parties, préférablement au moins 120 parties de résine réactive, particulièrement préférablement au moins 200 parties de résine réactive, en particulier au moins 300 parties de l'au moins une résine réactive, pour 100 parties de polymère et de résine adhésive,
et l'adhésif de fixation finale étant fabriqué à base d'au moins une résine époxy et l'adhésif de fixation temporaire contenant la même classe de résine réactive que la résine réactive de l'adhésif de fixation finale.

2. Procédé selon la revendication 1, **caractérisé en ce que** l'au moins un polymère est présent dans l'adhésif de fixation temporaire en tant que phase polymérique continue.

3. Procédé selon l'une quelconque des revendications 1 et 2, **caractérisé en ce qu'**au moins un polymère est un élastomère ou un thermoplastique.

4. Procédé selon l'une quelconque des revendications 1 à 3, **caractérisé en ce que** l'au moins une résine réactive est présente dans la phase polymérique continue au moins en partie, de préférence totalement, de manière dissoute homogènement.

5. Procédé selon l'une quelconque des revendications 1 à 4, le ruban adhésif étant présent sans support en tant que ruban adhésif de transfert.

6. Procédé selon la revendication 1, **caractérisé en ce que** le remplissage de l'adhésif de fixation finale est réalisé par un procédé d'infusion de résine.
